# EUROPEAN PATENT SPECIFICATION

(11) **EP 0 361 651 B1**
(45) Date of publication and mention of the grant of the patent: **06.12.1995**
(21) Application number: 89307331.2
(22) Date of filing: 19.07.1989
(51) Int. Cl.: G02F 1/015

(54) **Optical element and method of modulating light by using the same**
Optisches Element und Verfahren zum Modulieren von Licht unter Verwendung desselben
Elément optique et procédé pour moduler la lumière en utilisant celui-ci

(30) Priority: 30.08.1988 JP 216988/88; 22.09.1988 JP 239416/88
(43) Date of publication of application: 04.04.1990
(73) Proprietor: MITSUBISHI DENKI KABUSHIKI KAISHA, Tokyo (JP)
(72) Inventor: Tokuda, Yasunori c/o Chuo Kenkyusho of Mitsubishi, Amagasaki City Hyogo Prefecture (JP); Tsukada, Noriaki c/o Chuo Kenkyusho of Mitsubishi, Amagasaki City Hyogo Prefecture (JP)
(74) Representative: Hackett, Sean James

(56) References cited:
- WO-A-84/03364
- WO-A-89/09425
- US-A- 4 626 075
- IEEE JOURNAL OF QUANTUM ELECTRONICS, vol. QE-21, no. 2, February 1985, T.H. WOOD et al.: "131ps Optical Modulation in Semiconductor Multiple Quantum Wells (MQW's)", pp. 117-118
- APPLIED PHYSICS LETTERS, vol. 44, no. 1, January 1, 1984, T.H. WOOD et al.: "High-speed optical modulation with Ga As/Ga Al As quantum wells in a p-i-n diode structure", pp. 16-18
- Applied physics letter, vol. 49, no. 13, pp. 821-823

## Description

### BACKGROUND OF THE INVENTION

### Field of the Invention

This invention relates to an optical element having a non-linear optical characteristic and also to a method of modulating light by using this optical element.

### Description of the Related Art

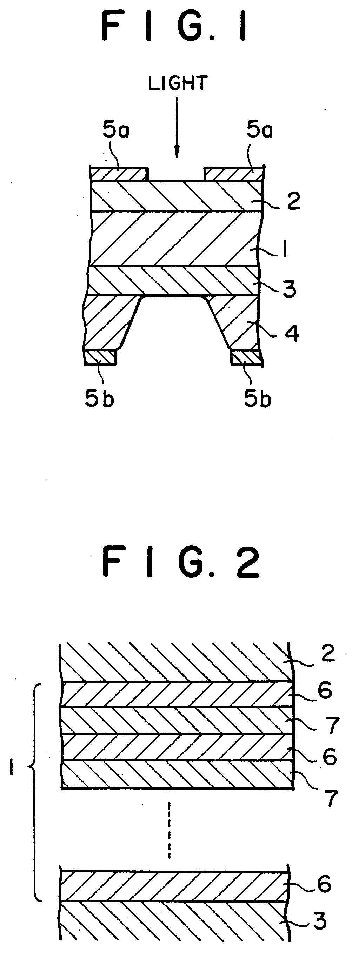

Fig. 1 is a cross-sectional view of an optical element having a pin structure disclosed in Applied Physics Letters, Vol.44, No.1 , 1984. An n-type AlGaAs clad layer 3 is formed over an upper surface of a GaAs substrate 4, and an active multiple quantum well layer 1 is formed over the clad layer 3. A p-type AlGaAs clad layer 2 is formed over the active layer 1. Electrodes 5a and 5b are respectively formed on the upper surface of the clad layer 2 and the lower surface of the substrate 4.

The active layer 1 has a lamination structure such that GaAs well layers 6 and AlGaAs barrier layers 7 each having a thickness of about 100 Å are alternately superposed on each other, as shown in Fig. 2.

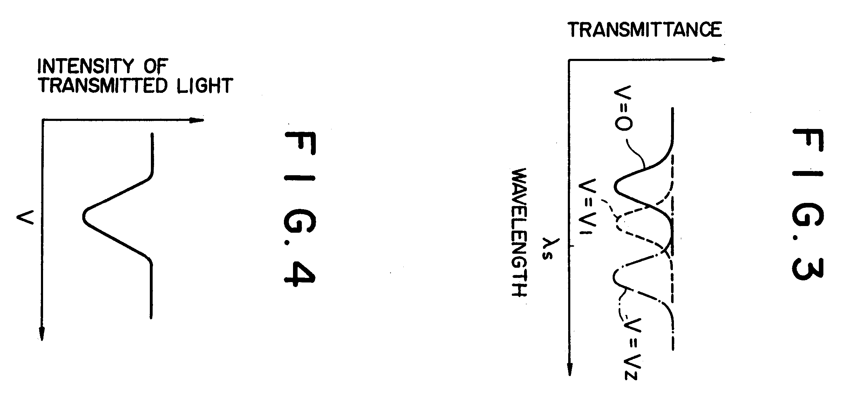

The thus-constructed optical element operates as described below. If a reverse voltage V is applied between the electrodes 5a and 5b, energy bands formed in the active layer 1 are bent, and the peak energy absorbed in the active layer 1 is thereby changed. Specifically, as shown in Fig. 3, the absorption peak is shifted to the long-wavelength side, i.e., to the low-energy side as the value of the applied reverse voltage V increases from 0 to V₁ (> 0) and to V₂ (> V₁). Consequently, when light having a certain wavelength, e.g., λs shown in Fig. 3 is being introduced into this optical element, the transmission intensity of introduced light can be modulated by changing the voltage V applied between the electrodes 5a and 5b, as shown in Fig. 4.

In the conventional optical element, however, barrier layers 7 having a thickness of at least about 100 A are formed between well layers 6, and the coupling between the well layers 6 are therefore negligibly small. In consequence, in order to bend the energy bands to a large extent, it is necessary to provide electrodes 5a and 5b so as to form an electric field therebetween by the application of reverse voltage V, and the resulting structure is therefore complicated. In addition, the extent to which the absorption peak is shifted is small with respect to the bending of the energy bands in the active layer 1.

WO 89/09425 discloses an electro optic quantum well device including a multi-layered semiconductor structure. Although this device is provided with quantum well layers of mutually different widths in an attempt to improve modulation of light, it does not solve the above-mentioned problems.

Applied physics letters, Vol. 49, No. 13, of 29 September 1986 includes an article entitled "integrated quantum well self-electro-optic effect device: 2 x 2 array optically bistable switches" at pages 821 - 823. This article discloses an optical element which includes the features of the preamble of Claim 1.

### SUMMARY OF THE INVENTION

In view of these problems, an object of the present invention is to provide an optical element having a simple structure while being capable of varying the absorption peak.

Another object of the present invention is to provide a method of modulating signal light using this optical element.

The present invention therefore provides an optical element according to claim 1. Preferred features of the invention are set out in claims 2 to 6.

The present invention also provides a method of modulating light according to claim 7. Preferred features of this aspect of the invention are set out in claims 8 to 11.

### BRIEF DESCRIPTION OF THE DRAWINGS

Fig. 1 is a cross-sectional view of a conventional optical element;
Fig. 2 is a cross-sectional view of an enlarged cross-sectional view of a part of the element shown in Fig. 1;
Figs. 3 and 4 are diagrams of transmission characteristics of the element shown in Fig. 1;
Fig. 5 is a cross-sectional view illustrating the structure of an optical element which represents an embodiment of the present invention;
Fig. 6 is an enlarged cross-sectional view of light absorbing layers of the embodiment;
Figs. 7 and 8 are diagrams of energy bands in coupled quantum well layers of the embodiment;
Figs. 9 and 10 are diagrams of characteristics of the absorbed peak energy with respect to the optical excitation intensity in the embodiment; and
Figs. 11 and 13 are diagrams of transmission characteristics of the embodiment.

### DESCRIPTION OF THE PREFERRED EMBODIMENT

An embodiment of the present invention will be described below with reference to the accompanying drawings.

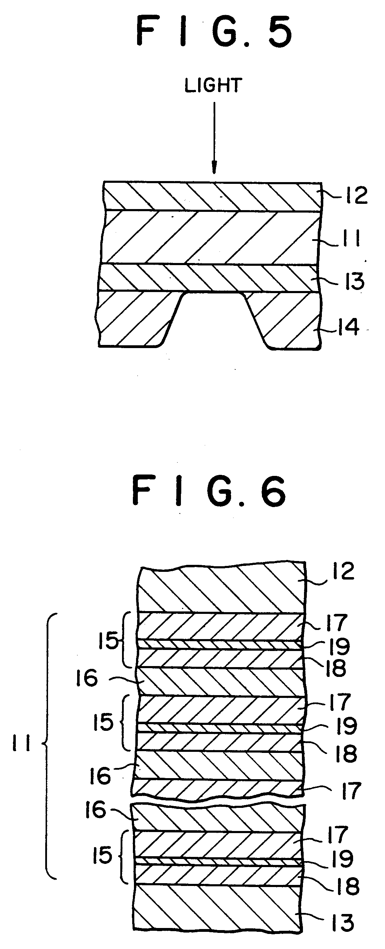

Referring first to Fig. 5, an optical element has a GaAs substrate 14, on which an n-type AlGaAs clad layer 13 is formed. A light absorbing layer 11 is formed over the clad layer 13, and a p-type AlGaAs clad layer 12 is formed over the light absorbing layer 11.

As shown in Fig. 6, the light absorbing layer 11 has a structure such that a plurality of coupled quantum well layers 15 are stacked with barrier layers 16 therebetween. Each barrier layer 16 has a thickness of about 100 Å. Each coupled quantum well layer 15 is an asymmetrically coupled dual quantum well lamination constituted by a GaAs quantum well layer 17 having a thickness of 100 Å, a GaAs quantum well layer 18 having a thickness of 80 Å and a AlGaAs tunnel barrier layer 19 having a thickness of about 10 Å, the AlGaAs tunnel barrier layer 19 being interposed between the layers 17 and 18.

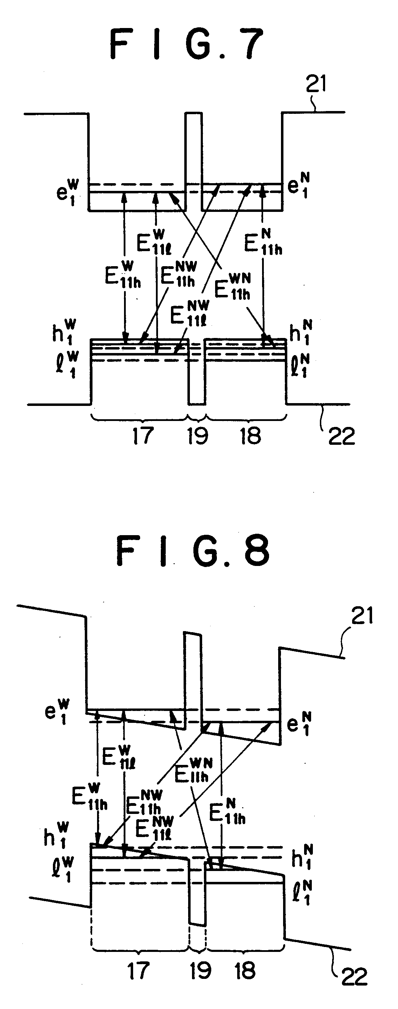

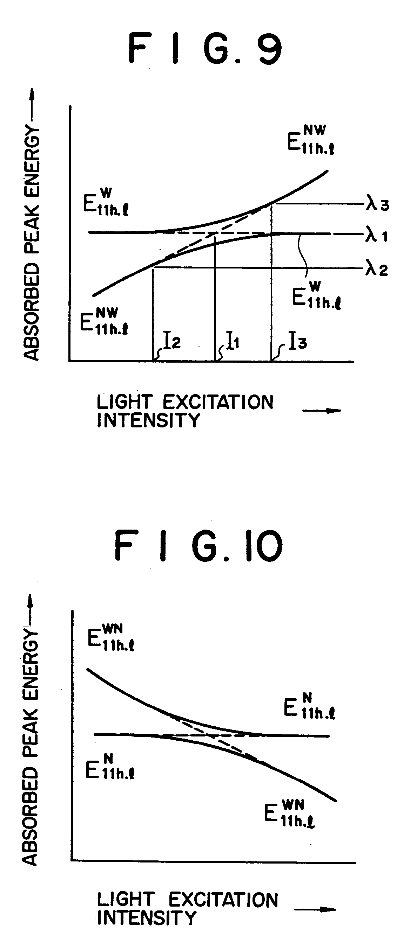

The operation of this embodiment will be described here below. Figs. 7 and 8 show energy bands in each coupled quantum well layer 15 of the light absorbing layer 11. In Figs. 7 and 8, e represents the energy level at a conduction band 21, h and *l* respectively represent energy levels at a valence electron band 22. A superscript affix W attached to each of energy level characters designates the thicker quantum well layer 17, while a superscript affix N designates the thinner quantum well layer 18. A subscript of each energy level character represents the quantum level. That is, the energy levels are indicated with respect to a quantum level of n = 1 alone to simplify the explanation. A character E represents transition energy between the conduction band 21 and the valence electron band 22, and superscripts of E designate the quantum well layers in relation to the conduction band 21 and the valence electron band 22 in this order. With respect to energy transmitting in the same quantum well layer, only one superscript designating the corresponding quantum well layer is attached to the character E. Subscripts of transition energy E designate the quantum level of the conduction band 21 and that of the valence electron band 22. For instance, E₁₁ₕ^{NW} represents a transition energy E between an energy level e₁^{N} at the conduction band 21 and an energy level h₁^{W} at the valence electron band 22.

Since there is a built-in potential, the energy bands in each coupled quantum well layer 15 are bent in a thermal equilibrium state, as illustrated in Fig. 8. If light is introduced into this optical device as shown in Fig. 5, the built-in potential of the coupled quantum well layer 15 is screened by carriers excited by the light, thereby making the energy bands in each coupled quantum well layer 15 flat. Since the amount of carriers excited in each coupled quantum well layer 15 is proportional to the intensity of introduced light, the degree of flatness of the energy bands in each coupled quantum well layer 15 becomes higher as the intensity of light is increased, so that the state where the energy bands becomes closer to the completely flat state shown in Fig. 7. Therefore, during the transition from the state shown. in Fig. 8 to the state shown in Fig. 7, transposition of the energy levels e₁^{N} and e₁^{W} in the quantum well layers 17 and 18 at the conduction band 21 takes place.

Figs. 9 and 10 show characteristics of absorbed peak energy with respect to the optical excitation intensity or the intensity of introduced light. Regarding transition energies E_{11h,*l*}^{W} and EE_{11h,*l*}^{NW} shown in Fig. 9, it is considered that the levels of these transition energies change and intersect each other, as indicated by the broken lines in Fig. 9, if the degree of coupling between the quantum well layers 17 and 18 is negligible. In this embodiment's optical element, however, the degree of coupling between the quantum well layers 17 and 18 is sufficiently high since these layers are formed on both surfaces of the tunnel barrier layer 19 having a small thickness of about 10 Å. The transition energies EE_{11h,*l*}^{W} and E_{11h,*l*}^{NW} therefore change repulsively in the vicinity of the assumed point of intersection. As a result, the transition energies or absorbed peak energies change in response to the optical excitation intensity, as indicated by the solid lines in Fig. 9. Similarly, changes of the transition energies EE_{11h,*l*}^{WN} and EE_{11h,*l*}^{N} are illustrated in Fig. 10.

Then, signal light having a wavelength and an intensity such as to generate transition energy levels indicated by the solid lines in Figs. 9 and 10 is prepared, and this light is introduced into the optical element, as shown in Fig. 5. In this state, a control light different from the signal light is introduced into the optical element. The optical excitation intensity in each coupled quantum well layer 15 of the light absorbing layer 11 is changed to an extent corresponding to the intensity of the control light, and the absorbed peak energy is thereby abruptly changed. That is, the transmittance of the optical element with respect to the signal light is changed, thus enabling switching of the signal light.

If both signal light and control light are introduced, and if the wavelength and intensity of each of the signal light and the control light are set such as to generate transition energy levels in combination indicated by the solid lines in Figs. 9 and 10, the absorbed peak energy is changed along the corresponding solid line of these diagrams by changing the intensity of the control light, thereby effecting intensity modulation of the transmitted signal light.

In the above-described embodiment, the energy bands in the light absorbing layer 11 are changed by the incidence of the control light. However, it is also possible to change the energy bands by providing the optical element with electrodes and forming an electric field, as in the case of the above-described conventional element.

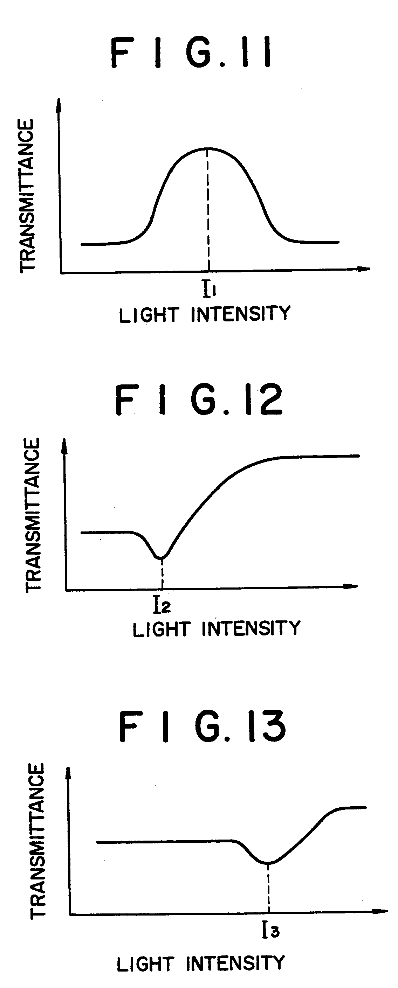

Screening of the built-in potential of each coupled quantum well layer 15 of the light absorbing layer 11 can be effected by only the energy of the signal light. It is therefore possible to change the transmittance characteristics with respect to the signal light by changing the wavelength of the signal light without using control light or an electric field. For example, the optical element exhibits, with respect to signal light having a wavelength λ₁ shown in Fig. 9, a transmittance characteristic, such as that shown in Fig. 11, which is generally symmetric about a light intensity I₁, but it exhibits, with respect to signal light having a wavelength λ₂ shown in Fig. 9, a transmittance characteristic, such as that shown in Fig. 12, in which the transmittance is minimized at a light intensity I₂. The transmittance with respect to signal light having a wavelength λ₃ shown in Fig. 9 is minimized at a light intensity I₃, as shown in Fig. 13. Thus, the transmission characteristics or absorption characteristics of the optical element can be varied by only the wavelength of signal light.

It is preferable to set the thickness of the tunnel barrier layer 19 to a value not larger than 50 Å in order to make the coupling between the quantum well layers 17 and 18 in the coupled quantum well layer 15 suitable.

In the above-described embodiment, the signal light is introduced perpendicularly into the light absorbing layer 11, as shown in Fig. 5. Instead, the light absorbing layer 11 may be used as an optical waveguide into which the signal light is introduced in parallel therewith.

In the above-described embodiment, a pair of quantum well layers 17 and 18 formed of the same material (GaAs) while having different thicknesses are used to form the coupled quantum well layer 15. However, the structure of this layer is not limited to this; a pair of quantum well layers having the same thickness and formed of different materials or a pair of quantum well layers having different thicknesses and formed of different materials may be used. The structure of the coupled quantum well layer 15 is limited to an asymmetric quantum well structure but a symmetric quantum well structure enables the same effects. The coupled quantum well layer 15 may have a multiple quantum well structure constituted by triple or more multiplicate lamination instead of the double quantum well structure.

## Claims

1. An optical element for modulating light comprising:
a p-type cladding layer (12);
an n-type cladding layer (13); and
light absorbing means (11) provided between the p-type and n-type cladding layers (12, 13), said absorbing means (11) having at least one multiple quantum well laminated structure which comprises a pair of quantum well layers (17, 18) and a first barrier layer (19) between the said pair of quantum well layers (17, 18);
the said first barrier layer (19) being a tunnel barrier layer, such that the said multiple quantum well laminated structure is a coupled multiple quantum well laminated structure (15), characterised in that the said first barrier layer (19) has a thickness of not larger than 50 Å, and the said coupled multiple quantum well laminated structure is an asymmetric quantum well laminated structure.

2. An optical element according to claim 1, wherein said light absorbing means (11) comprises a plurality of coupled multiple quantum well laminated structures which are laminated with each other with second barrier layers (16) interposed therebetween.

3. An optical element according to any preceding claim, wherein said p-type cladding layer (12), said n-type cladding layer (13) and said first barrier layer (19) are formed from AlGaAs, said pair of quantum well layers (17, 18) being formed from GaAs.

4. An optical element according to claim 2 or 3 wherein said second barrier layers (17) are formed from AlGaAs.

5. An optical element according to any preceding claim, further comprising a substrate (14) connected to one of said p-type cladding layer (12) and said n-type cladding layer (13).

6. An optical element according to claim 5, wherein said substrate (14) is formed from GaAs.

7. A method of modulating signal light, comprising:
introducing the signal light into an optical element according to claim 1; and
making the quantum levels of said quantum well layers (17, 18) of said coupled multiple quantum well laminated structure (15) intersect each other so as to change the absorption characteristics of said light absorbing means (11) for modulating the said signal light.

8. A method according to claim 7, wherein said intersection between said quantum levels of said quantum well layers is effected by carriers generated in said light absorbing means (11) when control light different from said signal light is introduced into said optical element.

9. A method according to claim 7, wherein said intersection between said quantum levels of said quantum well layers (17, 18) is effected by carriers generated in said light absorbing means (11) when said signal light is introduced into said optical element.

10. A method according to claim 7, 8, or 9 wherein said signal light is introduced perpendicularly into said quantum well layers.

11. A method according to claim 7, 8 or 9, wherein said signal light is introduced into said quantum well layers parallel therewith.

## Patentansprüche

1. Optisches Element zur Modulation von Licht, das folgendes aufweist:
- eine Mantelschicht (12) vom p-Typ;
- eine Mantelschicht (13) vom n-Typ; und
- eine Lichtabsorptionseinrichtung (11), die zwischen den Mantelschichten (12, 13) vom p-Typ und vom n-Typ vorgesehen ist, wobei die Absorptionseinrichtung (11) wenigstens eine Quantenmulden-Vielfachlaminatstruktur hat, die ein Paar von Quantenmuldenschichten (17, 18) und eine erste Sperrschicht (19) zwischen diesem Paar von Quantenmuldenschichten (17, 18) aufweist;
- wobei die erste Sperrschicht (19) eine Tunnelsperrschicht ist, so daß die Quantenmulden-Vielfachlaminatstruktur eine gekoppelte Quantenmulden-Vielfachlaminatstruktur (15) ist,
dadurch gekennzeichnet,
daß die erste Sperrschicht (19) eine Dicke von nicht mehr als 50 Å hat und die gekoppelte Quantenmulden-Vielfachlaminatstruktur eine asymmetrische Quantenmulden-Laminatstruktur ist.

2. Optisches Element nach Anspruch 1,
wobei die Lichtabsorptionseinrichtung (11) eine Vielzahl von gekoppelten Quantenmulden-Vielfachlaminatstrukturen aufweist, die miteinander unter Zwischenfügung von zweiten Sperrschichten (16) laminiert sind.

3. Optisches Element nach einem der vorhergehenden Ansprüche, wobei die Mantelschicht (12) vom p-Typ, die Mantelschicht (13) vom n-Typ und die erste Sperrschicht (19) aus AlGaAs gebildet sind und das Paar von Quantenmuldenschichten (17, 18) aus GaAs gebildet ist.

4. Optisches Element nach Anspruch 2 oder 3,
wobei die zweiten Sperrschichten (16) aus AlGaAs gebildet sind.

5. Optisches Element nach einem der vorhergehenden Ansprüche, das ferner ein Substrat (14) aufweist, das mit einer von der Mantelschicht (12) vom p-Typ und der Mantelschicht (13) vom n-Typ verbunden ist.

6. Optisches Element nach Anspruch 5,
wobei das Substrat (14) aus GaAs gebildet ist.

7. Verfahren zum Modulieren von Signallicht, das folgendes aufweist:
- Einkoppeln des Signallichts in ein optisches Element nach Anspruch 1; und
- Veranlassen, daß die Quantenniveaus der Quantenmuldenschichten (17, 18) der gekoppelten Quantenmulden-Vielfachlaminatstruktur (15) einander durchdringen, so daß dadurch die Absorptionscharakteristiken der Lichtabsorptionseinrichtung (11) geändert werden, um das Signallicht zu modulieren.

8. Verfahren nach Anspruch 7,
wobei die Durchdringung zwischen den Quantenniveaus der Quantenmuldenschichten durch Träger bewirkt wird, die in der Lichtabsorptionseinrichtung (11) erzeugt werden, wenn Steuerlicht, das von dem Signallicht verschieden ist, in das optische Element eingekoppelt wird.

9. Verfahren nach Anspruch 7,
wobei die Durchdringung zwischen den Quantenniveaus der Quantenmuldenschichten (17, 18) durch Träger bewirkt wird, die in der Lichtabsorptionseinrichtung (11) erzeugt werden, wenn das Signallicht in das optische Element eingekoppelt wird.

10. Verfahren nach Anspruch 7, 8 oder 9,
wobei das Signallicht in die Quantenmuldenschichten senkrecht dazu eingekoppelt wird.

11. Verfahren nach Anspruch 7, 8 oder 9,
wobei das Signallicht in die Quantenmuldenschichten parallel dazu eingekoppelt wird.

## Revendications

1. Elément optique pour moduler la lumière comprenant :
une couche de placage du type p (12) ;
une couche de placage du type n (13) ; et
un moyen absorbant la lumière (11) prévu entre les couches de placage du type p et du type n (12, 13), ledit moyen absorbant (11) ayant au moins une structure laminée à puits quantiques multiples qui comprend deux couches de puits quantiques (17, 18) et une première couche formant barrière (19) entre lesdits deux couches de puits quantiques (17, 18) ;
ladite première couche formant barrière (19) étant une couche formant barrière tunnel de manière que ladite structure laminée à puits quantiques multiples soit une structure laminée à puits quantiques multiples couplée (15) caractérisé en ce que ladite première couche formant barrière (19) a une épaisseur qui ne dépasse pas 50 Å et ladite structure laminée à puits quantiques multiples couplée est une structure laminée à puits quantiques asymétriques.

2. Elément optique selon la revendication 1 où ledit moyen absorbant la lumière (11) comprend un certain nombre de structures laminées couplées à puits quantiques multiples qui sont laminées les unes aux autres avec des secondes couches formant barrières (16) interposées entre elles.

3. Elément optique selon toute revendication précédente où ladite couche de placage (12) du type p, ladite couche de placage (13) du type n et ladite première couche formant barrière (19) sont formées en AlGaAs, ladite paire de couches de puits quantiques (17, 18) étant formée en GaAs.

4. Elément optique selon la revendication 2 ou 3 où lesdites secondes couches formant barrières (17) sont formées de AlGaAs.

5. Elément optique selon toute revendication précédente comprenant de plus un substrat (14) connecté à l'une de ladite couche de placage du type p (12) et de ladite couche de placage du type n (13).

6. Elément optique selon la revendication 5 où ledit substrat (14) est formé en GaAs.

7. Méthode de modulation de la lumière d'un signal consistant à
introduire la lumière du signal dans un élément optique selon la revendication 1 ; et
forcer les niveaux quantiques desdites couches de puits quantiques (17, 18) de ladite structure laminée à puits quantiques multiples couplée à se couper afin de changer les caractéristiques d'absorption dudit moyen (11) absorbant la lumière pour moduler ladite lumière du signal.

8. Méthode selon la revendication 7 où ladite intersection entre lesdits niveaux quantiques desdites couches de puits quantiques est effectuée par des porteurs générés dans ledit moyen absorbant la lumière (11) quand une lumière de contrôle différente de ladite lumière du signal est introduite dans ledit élément optique.

9. Méthode selon la revendication 7 où ladite intersection entre lesdits niveaux quantiques desdites couches de puits quantiques (17, 18) est effectuée par des porteurs générés dans ledit moyen absorbant la lumière (11) quand ladite lumière du signal est introduite dans ledit élément optique.

10. Méthode selon la revendication 7, 8 ou 9 où ladite lumière du signal est introduire perpendiculairement dans lesdites couches de puits quantiques.

11. Méthode selon la revendication 7, 8 ou 9 où ladite lumière du signal est introduite dans lesdites couches de puits quantiques parallèlement avec elles.
